# EUROPÄISCHE PATENTANMELDUNG

(11) **EP 4 530 828 A1**
(43) Veröffentlichungstag der Anmeldung: **02.04.2025**
(21) Anmeldenummer: 23200610.6
(22) Anmeldetag: 28.09.2023
(51) Int. Cl.: G06F 8/35, G06F 40/44, G06F 40/49, G06N 3/0475

(54) **AUTOMATISIERTE ERZEUGUNG VON BERECHNUNGSMODELLEN WIE KELLERAUTOMATEN, ZUSTANDSAUTOMATEN ODER PETRI-NETZE**

(71) Anmelder: Robert Bosch GmbH, 70442 Stuttgart (DE)
(72) Erfinder: Schlund, Maximilian, 71034 Boeblingen (DE); Quante, Jochen, 71640 Ludwigsburg (DE); Woehrle, Matthias, 74321 Bietigheim-Bissingen (DE); Hecking-Harbusch, Jesko, 71229 Leonberg (DE); Sierra Loaiza, Sebastian Ernesto, 04107 Leipzig (DE)

(57) **Zusammenfassung**

Ein erster Aspekt der vorliegenden Offenbarung betrifft ein computer-implementiertes Verfahren für die automatisierte Erzeugung eines Berechnungsmodells, insbesondere eines Kellerautomaten, eines Zustandsautomaten und/oder eines Petri-Netzes, umfassend Erzeugen, via ein Maschinenlernmodell, mindestens eines Berechnungsmodells zumindest basierend auf einer Spezifikation, die das mindestens eine Berechnungsmodell erfüllen soll, und einem Prompt; und Bewerten des mindestens einen Berechnungsmodells, wobei ein Bewertungsergebnis resultiert. Ein zweiter Aspekt der vorliegenden Offenbarung betrifft ein computer-implementiertes Verfahren zum weiteren Trainieren eines Maschinenlernmodells, wobei das Maschinenlernmodell dafür ausgelegt ist, mindestens ein Berechnungsmodell, insbesondere einen Kellerautomaten, einen Zustandsautomaten und/oder ein Petri-Netz, zumindest basierend auf mindestens einer Spezifikation, die das mindestens eine Berechnungsmodell erfüllen soll, und einem Prompt zu erzeugen; das Verfahren umfassend Anpassen des Maschinenlernmodells zumindest basierend auf mindestens einem Berechnungsmodell und mindestens einem Bewertungsergebnis, wobei das mindestens eine Bewertungsergebnis durch Bewerten des mindestens einen Berechnungsmodell resultiert.

## Beschreibung

### Stand der Technik

Embedded Software wird zum Steuern, Regeln und/oder Überwachen technischer Systeme, insbesondere cyber-physischer Systeme wie z.B. Recheneinheiten eines Fahrzeugs und/oder eines Roboters, eingesetzt. Die Dynamik solcher technischen Systeme kann in bestimmten Fällen ganz oder teilweise durch ein Berechnungsmodell abgebildet werden. Das Berechnungsmodell kann wiederum in ausführbaren Code übersetzt werden, der dann auf einem oder mehreren Recheneinheiten (z.B. Steuergeräten) zum Steuern, Regeln und/oder Überwachen des technischen Systems ausgeführt wird.

Der Begriff Berechnungsmodell kann im Sinne des englischen Begriffs Model of computation verstanden werden. Im Hinblick auf die Berechenbarkeit und/oder rechnerische Komplexität, kann ein Berechnungsmodell somit als Modell gesehen werden, das zunächst einmal beschreibt, wie eine oder mehrere Ausgangsgrößen eines Algorithmus' angesichts einer oder mehrerer Eingangsgrößen berechnet werden. Weiterhin kann das Modell auch beschreiben, wie die einen oder mehreren Recheneinheiten, der Speicher und/oder die Kommunikation organisiert sind.

Berechnungsmodelle können zum Beispiel in sequenzielle, funktionale und nebenläufige Modelle unterschieden werden. Beispiele für sequenzielle Modelle sind Kellerautomaten und (die im Vergleich zu Kellerautomaten spezielleren) Zustandsautomaten. Ein nebenläufiges Modell kann zum Beispiel ein Petri-Netz sein. Insbesondere Kellerautomaten, Zustandsautomaten und/oder Petri-Netze (aber auch andere Berechnungsmodelle) können in ausführbaren Code übersetzt werden, der dafür ausgelegt ist, das technische System zu steuern, zu regeln und/oder zu überwachen.

Im Hinblick auf die Übersetzung in ausführbaren Code, der z.B. auf Steuergeräten ausgeführt werden soll - d.h. der ausführbare Code wird dann zu embedded Software - muss bereits das Berechnungsmodell gemäß einer Spezifikation des technischen Systems erstellt werden. Diese Spezifikation kann, je nach technischem System, einen großen Komplexitätsgrad aufweisen und sich zudem über einen mitunter mehrjährigen Produktentwicklungsprozess (Entwicklung, Test, Produktion und Wartung) häufig ändern. Aufgrund dessen ist es für einzelne Software-Ingenieure und selbst für ganze Software-Entwicklungsabteilungen herausfordernd, den Überblick über die Spezifikation zu behalten und stets das dazugehörige Berechnungsmodell entsprechend anzupassen. Dies umso mehr, da Berechnungsmodelle bisher überwiegend manuell oder mit nur geringem Automatisierungsgrad, d.h. von Software-Ingenieuren erstellt, erweitert, korrigiert und/oder gewartet werden. Da das sehr zeitaufwendig, kostenintensiv und gleichwohl fehleranfällig ist, wäre ein höherer Automatisierungsgrad bei der Erstellung von Berechnungsmodellen wünschenswert.

Der Offenbarung liegt daher das Problem zugrunde, automatisiert aber dennoch verlässlich Berechnungsmodelle zum Steuern, Regeln und/oder Überwachen von technischen und insbesondere spezifizierten Systemen bereitzustellen.

### Offenbarung der Erfindung

Ein erster allgemeiner Aspekt der vorliegenden Offenbarung betrifft ein computer-implementiertes Verfahren für die automatisierte Erzeugung eines Berechnungsmodells, insbesondere eines Kellerautomaten, eines Zustandsautomaten und/oder eines Petri-Netzes. Das Verfahren umfasst Erzeugen, via ein Maschinenlernmodell, mindestens eines Berechnungsmodells zumindest basierend auf einer Spezifikation, die das mindestens eine Berechnungsmodell erfüllen soll, und einem Prompt. Das Verfahren umfasst weiterhin Bewerten des mindestens einen Berechnungsmodells, wobei ein Bewertungsergebnis resultiert.

Das mindestens eine Berechnungsmodell kann dafür ausgelegt sein, die Steuerung, Regelung und/oder Überwachung eines technischen Systems, insbesondere eines cyber-physisches Systems, insbesondere mindestens einer Recheneinheit eines Fahrzeugs abzubilden. Das Verfahren kann Übersetzen des mindestens einen Berechnungsmodells in einen ausführbaren Code umfassen, der dafür ausgelegt ist, das technische System, insbesondere das cyber-physische System, insbesondere die mindestens eine Recheneinheit des Fahrzeugs zu steuern, regeln und/oder zu überwachen. Das Verfahren kann in einer elektronischen Programmierumgebung ausgeführt werden.

Ein zweiter allgemeiner Aspekt der vorliegenden Offenbarung betrifft ein Computer-implementiertes Verfahren zum weiteren Trainieren eines Maschinenlernmodells, wobei das Maschinenlernmodell dafür ausgelegt ist, mindestens ein Berechnungsmodell, insbesondere einen Kellerautomaten, einen Zustandsautomaten und/oder ein Petri-Netz, zumindest basierend auf mindestens einer Spezifikation, die das mindestens eine Berechnungsmodell erfüllen soll, und einem Prompt zu erzeugen, wobei das Verfahren Anpassen des Maschinenlernmodells zumindest basierend auf mindestens einem Berechnungsmodell und mindestens einem Bewertungsergebnis umfasst, wobei das mindestens eine Bewertungsergebnis durch Bewerten des mindestens einen Berechnungsmodell resultiert. Das Verfahren nach dem zweiten allgemeinen Aspekt (oder einer Ausführungsform) kann, muss aber nicht nach dem Verfahren nach dem ersten allgemeinen Aspekt (oder einer Ausführungsform davon) ausgeführt werden.

Ein dritter allgemeiner Aspekt der vorliegenden Offenbarung betrifft ein Computer-System, das dafür ausgelegt ist, das computer-implementierte Verfahren für die automatisierte Erzeugung eines Berechnungsmodells, insbesondere eines Kellerautomaten, eines Zustandsautomaten und/oder eines Petri-Netzes, nach dem ersten allgemeinen Aspekt (oder einer Ausführungsform davon) und/oder das computer-implementiertes Verfahren zum weiteren Trainieren eines Maschinenlernmodells nach dem zweiten allgemeinen Aspekt (oder einer Ausführungsform davon) auszuführen.

Ein vierter allgemeiner Aspekt der vorliegenden Offenbarung betrifft ein Computer-Programm, das dafür ausgelegt ist, das computer-implementierte Verfahren für die automatisierte Erzeugung eines Berechnungsmodells, insbesondere eines Kellerautomaten, eines Zustandsautomaten und/oder eines Petri-Netzes, nach dem ersten allgemeinen Aspekt (oder einer Ausführungsform davon) und/oder das computer-implementiertes Verfahren zum weiteren Trainieren eines Maschinenlernmodells nach dem zweiten allgemeinen Aspekt (oder einer Ausführungsform davon) auszuführen.

Ein fünfter allgemeiner Aspekt der vorliegenden Offenbarung betrifft ein computer-lesbares Medium oder Signal, das das Computer-Programm nach dem vierten allgemeinen Aspekt (oder einer Ausführungsform davon) speichert und/oder enthält.

Das in dieser Offenbarung vorgeschlagene Verfahren nach dem ersten Aspekt (oder einer Ausführungsform davon) ist auf die automatisierte Erzeugung mindestens eines Berechnungsmodells gerichtet. Dank des hohen Grads der Automatisierung kann das mindestens eine Berechnungsmodell schneller und häufiger aber zugleich verlässlich angepasst werden, insbesondere an eine häufig sich ändernde Spezifikation des technischen Systems. Dies wird zum einen durch das Maschinenlernmodell mit einem hinreichend großen Maschinensprachverständnis insbesondere im Hinblick auf die Spezifikation und zum anderen durch das automatisierte Bewerten des mindestens einen Berechnungsmodells nach etablierten V & V Methoden erreicht. So kann zum Beispiel das mindestens eine erstellte Berechnungsmodell gegen eine formale Spezifikation verifiziert werden. Dadurch kann eine maschinelle Kreativität des Maschinenlernmodells genutzt werden, zugleich aber die Qualität des mindestens einen Berechnungsmodells gesichert werden. In anderen Worten: Fehler, insbesondere unvollständige oder fehlerhafte Berechnungsmodelle, die gelegentlich durchaus durch das Maschinenlernmodell entstehen können, werden verlässlich oder zumindest mit hinreichend großer Wahrscheinlichkeit durch die V & V Methoden erkannt, bevor sie in ausführbaren Code übersetzt werden und zum Steuern, Regeln und/oder Überwachen des technischen Systems wie z.B. eines Fahrzeugs oder eines Roboters eingesetzt werden. Dadurch wird auch das technische System verbessert. Zumindest kann eine Korrektheit und/oder eine Wahrscheinlichkeit für die Korrektheit über das Bewertungsergebnis ausgegeben werden. Wenn das Bewertungsergebnis nicht zufriedenstellend ist, kann das Verfahren wiederholt werden und gegebenenfalls der Prompt angepasst werden, um das mindestens eine Berechnungsmodell zu erweitern, zu verbessern und/oder zu korrigieren. Vorteilhafterweise kann auch im Falle eines nicht zufriedenstellenden Bewertungsergebnis ein Gegenbeispiel ausgegeben werden, das die Spezifikation verletzt. In einer weiteren Iteration des Verfahrens kann dann gegebenenfalls mit einem angepassten Prompt erneut ein Berechnungsmodell erzeugt werden, dass insbesondere dieses Gegenbeispiel verhindern soll. Falls nötig, kann stets auch manuell z.B. über die elektronische Programmierumgebung eingegriffen werden und das mindestens eine Berechnungsmodell entsprechend angepasst werden. Weiterhin ist es dank der Automatisierung und der Effizienz auch möglich eine (große) Vielzahl von Berechnungsmodellen zu erzeugen. Diese können vom selben Typ (z.B. nur Zustandsautomaten) oder von unterschiedlichem Typ sein. Sodann kann ein Berechnungsmodell ausgewählt werden, dass am besten die Spezifikation erfüllt. Informationen darüber können im Bewertungsergebnis ausgegeben werden.

Im Falle einer widersprüchlichen Spezifikation kann über das Bewertungsergebnis zurückgemeldet werden, dass kein Berechnungsmodell erzeugt werden konnte. Insoweit kann vorteilsweise auch die Spezifikation effizient auf Widersprüche geprüft werden.

Ein weiterer Vorteil besteht darin, dass die resultierenden Berechnungsmodelle dazu genutzt werden können, einen domänen-spezifischen Generator für Berechnungsmodelle zu trainieren. Dies kann zum Beispiel wie im Verfahren 200 nach dem zweiten allgemeinen Aspekt (oder einer Ausführungsform davon) erfolgen. Dadurch kann überwachtes Finetuning und/oder unüberwachtes (Reinforcement) Learning basierend auf den Bewertungsergebnissen durchgeführt werden, mithin das Verfahren nach dem ersten allgemeinen Aspekt (oder einer Ausführungsform davon) verbessert werden. Dadurch können dann (zukünftige) Berechnungsmodelle besser erzeugt werden.

### Kurzbeschreibung der Figuren

**Fig. 1a** illustriert schematisch beispielhafte Ausführungsformen eines computerimplementierten Verfahrens für die automatisierte Erzeugung eines Berechnungsmodells, insbesondere eines Kellerautomaten, eines Zustandsautomaten und/oder eines Petri-Netzes.
**Fig. 2** illustriert schematisch beispielhafte Maschinenlernmodelle, die zumindest Spezifikation und Prompt auf mindestens ein Berechnungsmodell abbilden.
**Fig. 3** illustriert schematisch das Bewerten des mindestens einen Berechnungsmodell.

### Detaillierte Beschreibung

Das in dieser Offenbarung vorgeschlagene Verfahren 100 ist auf die automatisierte Erzeugung von Berechnungsmodellen, insbesondere von Kellerautomaten, Zustandsautomaten und/oder Petri-Netzen gerichtet. Da Maschinenlernmodelle mitunter falsche Ergebnisse liefern, müssen die erzeugten Berechnungsmodelle validiert und verifiziert (V & V) werden, bevor deren Übersetzungen als ausführbarer Code als embedded Software zum Steuern, Regeln und/oder Überwachen eines technischen Systems zum Einsatz kommt.

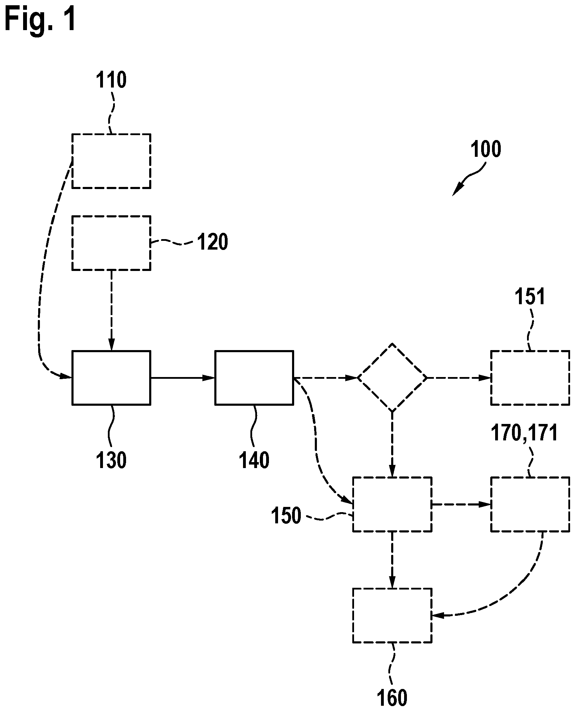

Offenbart wird dazu zunächst ein computer-implementiertes Verfahren 100, schematisch illustriert in **Fig. 1****,** für die automatisierte Erzeugung eines Berechnungsmodells, insbesondere eines Kellerautomaten, eines Zustandsautomaten und/oder eines Petri-Netzes. Das Verfahren 100 umfasst Erzeugen 130, via ein Maschinenlernmodell 30, mindestens eines Berechnungsmodells 40 zumindest basierend auf einer Spezifikation 10, die das mindestens eine Berechnungsmodell 40 erfüllen soll, und einem Prompt 20. Das Verfahren 100 umfasst weiterhin Bewerten 140 des mindestens einen Berechnungsmodells 40, wobei ein Bewertungsergebnis resultiert.

Das mindestens eine Berechnungsmodell 40 (englisch: model of computation) kann formal sein. Zum Beispiel kann das mindestens eine Berechnungsmodell 40 eine Datenstruktur, die in einer vorbestimmten Syntax und/oder vorbestimmten Grammatik (z.B. in einer Programmiersprache) geschrieben ist, umfassen oder eine solche Datenstruktur sein. Das mindestens eine Berechnungsmodell 40 kann ausführbarer Code sein. Andererseits muss das mindestens eine Berechnungsmodell 40 kein ausführbarer Code sein, sondern kann stattdessen dafür ausgelegt sein, in einen ausführbaren Code übersetzt 160 zu werden.

Das mindestens eine Berechnungsmodell 40 kann ein sequenzielles Modell umfassen oder sein. Zum Beispiel kann das mindestens eine Berechnungsmodell 40 einen Automaten umfassen oder ein Automat sein. Insbesondere kann das mindestens eine Berechnungsmodell 40 einen Kellerautomaten umfassen oder ein Kellerautomat sein. Insbesondere kann das mindestens eine Berechnungsmodell 40 einen Zustandsautomaten (d.h. einen endlichen Automaten) umfassen oder ein Zustandsautomat sein.

Alternativ oder zusätzlich kann das mindestens eine Berechnungsmodell 40 ein nebenläufiges Modell umfassen oder sein. Zum Beispiel kann das mindestens eine Berechnungsmodell 40 ein Petri-Netz umfassen oder sein.

Im Falle eines Kellerautomaten, eines Zustandsautomaten und/oder eines Petri-Netzes ist Entscheidbarkeit von Problemen gegeben. Diese Entscheidbarkeit kann genutzt werden, um zu prüfen, ob das mindestens eine Berechnungsmodell 40 die Spezifikation 10 erfüllt. Hierzu kann ein Model Checker zum Einsatz kommen. Andererseits muss Entscheidbarkeit von Problemen in dem mindestens einen Berechnungsmodell nicht notwendigerweise gegeben sein, da auch noch durch (äußeres) Testen geprüft werden kann, ob das mindestens eine Berechnungsmodell 40 die Spezifikation 10 erfüllt. Beim (äußeren) Testen können zum Beispiel eine oder mehrere Eingabegrößen vorgegeben und eine oder mehrere resultierende Ausgangsgrößen im Hinblick auf die Spezifikation 10 bewertet werden. Auch dadurch kann das mindestens eine Berechnungsmodell 40 validiert und/oder verifiziert werden.

Insbesondere wird ein computer-implementiertes Verfahren 100 für die automatisierte Erzeugung eines Kellerautomaten offenbart. Hier ist das mindestens eine Berechnungsmodell 40 somit ein Kellerautomat. Das Verfahren 100 umfasst Erzeugen 130, via ein Maschinenlernmodell 30, mindestens eines Kellerautomaten zumindest basierend auf einer Spezifikation 10, die der mindestens eine Kellerautomat erfüllen soll, und einem Prompt 20. Das Verfahren 100 umfasst weiterhin Bewerten 140 des mindestens einen Kellerautomaten, wobei ein Bewertungsergebnis resultiert.

Insbesondere wird ein computer-implementiertes Verfahren 100 für die automatisierte Erzeugung eines Zustandsautomaten offenbart. Hier ist das mindestens eine Berechnungsmodell 40 somit ein Zustandsautomat. Das Verfahren 100 umfasst Erzeugen 130, via ein Maschinenlernmodell 30, des mindestens einen Zustandsautomaten zumindest basierend auf einer Spezifikation 10, die der mindestens eine Zustandsautomat erfüllen soll, und einem Prompt 20. Das Verfahren 100 umfasst weiterhin Bewerten 140 des mindestens einen Zustandsautomaten, wobei ein Bewertungsergebnis resultiert.

Zudem wird ein computer-implementiertes Verfahren 100 für die automatisierte Erzeugung eines Petri-Netzes offenbart. Hier ist das mindestens eine Berechnungsmodell 40 somit ein Petri-Netz. Das Verfahren 100 umfasst Erzeugen 130, via ein Maschinenlernmodell 30, des mindestens einen Petri-Netzes zumindest basierend auf einer Spezifikation 10, die das mindestens eine Petri-Netz erfüllen soll, und einem Prompt 20. Das Verfahren 100 umfasst weiterhin Bewerten 140 des mindestens einen Petri-Netzes, wobei ein Bewertungsergebnis resultiert.

Allgemeiner kann das mindestens eine Berechnungsmodell 40 oder die Berechnungsmodelle einen Kellerautomaten, einen Zustandsautomaten und/oder ein Petri-Netz umfassen.

Das Bewertungsergebnis kann einen natürlichsprachlichen Text umfassen oder ein solcher natürlichsprachlicher Text sein. Alternativ oder zusätzlich kann das Bewertungsergebnis eine Datenstruktur, die in einer vorbestimmten Syntax (z.B. in einer Programmiersprache) geschrieben ist, umfassen oder eine solche Datenstruktur sein. Die Datenstruktur kann zum Beispiel den natürlichsprachlichen Text umfassen. Das Bewertungsergebnis kann einen oder mehrere numerische Werte, insbesondere einen oder mehrere Konfidenzwerte umfassen. Dadurch kann eine Güte des mindestens einen Berechnungsmodells 40 (z.B. des mindestens einen Kellerautomaten, des mindestens einen Zustandsautomaten oder des mindestens einen Petri-Netzes) kodiert werden, die bei der Validierung und Verifikation des mindestens einen Berechnungsmodells 40, mithin des durch das mindestens eine Berechnungsmodell 40 abgebildeten technischen Systems berücksichtigt werden kann. Das Bewerten 140 des mindestens einen Berechnungsmodells 40 kann als eine Validierung und/oder als eine Verifikation (V & V) gesehen werden.

Sollte es mal nicht gelingen, ein Berechnungsmodell, das die Spezifikation erfüllt, zu erzeugen, kann das Bewertungsergebnis eine Information umfassen, dass die Erzeugung des mindestens einen Berechnungsmodells fehlgeschlagen ist. Dies kann zum Beispiel dann passieren, wenn die Spezifikation an sich bereits widersprüchlich ist. Auch diese Information ist wertvoll für die Entwicklung des technischen Systems. In diesem Fall kann und muss dann die Spezifikation angepasst und insbesondere verbessert werden.

Das Verfahren 100 kann Empfangen 110 der Spezifikation 10 umfassen. Alternativ oder zusätzlich kann das Verfahren 100 Empfangen 120 des Prompt 20 umfassen. Alternativ oder zusätzlich kann das Verfahren 100 Empfangen des Maschinenlernmodells 30 umfassen.

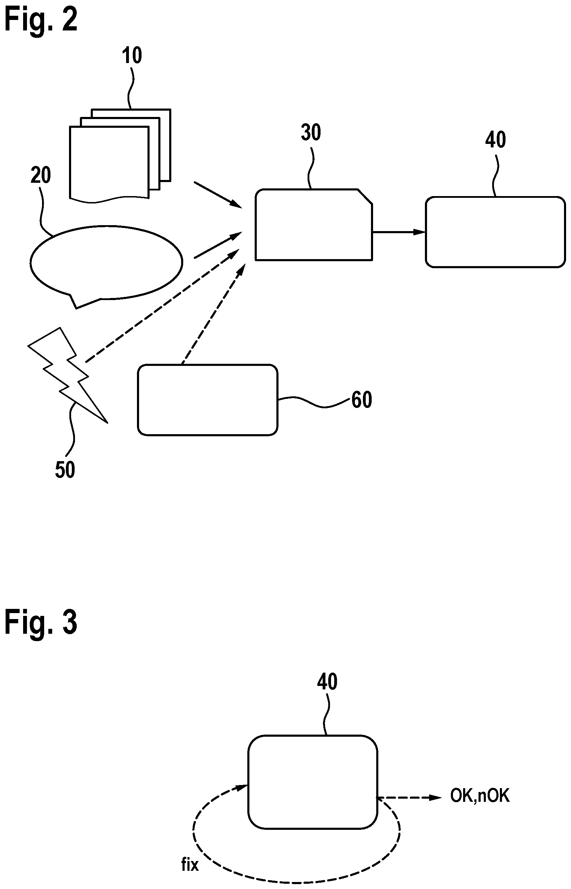

Wie z.B. in **Fig. 3** schematisch dargestellt, kann das mindestens eine Berechnungsmodell bewertet werden, wobei zum Beispiel jeweils die Ergebnisse OK oder nOK (kurz für: nicht OK) vom Bewertungsergebnis umfasst sind. Im Falle eines nOK-Ergebnisses, kann das mindestens eine Berechnungsmodell repariert ("gefixt" oder "fix") werden, wobei ein in einer früheren Iteration des Verfahrens 100 erzeugtes Berechnungsmodell zum Beispiel in einer weiteren Iteration des Verfahrens 100 angepasst, verbessert und/oder korrigiert werden kann.

Die Spezifikation 10 kann eine natürlichsprachliche Beschreibung umfassen oder eine solche sein. Die natürlichsprachliche Beschreibung kann ein Text sein oder umfassen, der das gewünschte Verhalten und/oder die gewünschten Eigenschaften des zu erzeugenden 130 mindestens einen Berechnungsmodells (z.B. des Kellerautomaten, des Zustandsautomaten und/oder des Petri-Netzes) beschreibt. Alternativ oder zusätzlich kann die Spezifikation 10 eine formale Beschreibung umfassen oder eine solche sein. Eine formale Spezifikation kann zum Beispiel eine formale Sprache umfassen oder auf dieser basieren, die gewünschte Abfolgen von Verhalten des technischen Systems darstellt.

Die natürlichsprachliche und/oder formale Spezifikation 10 des mindestens einen Berechnungsmodells 40 kann zum Beispiel einen oder mehrere Gültigkeitsbereiche für Parameter des mindestens einen Berechnungsmodells 40 umfassen. Alternativ oder zusätzlich kann die natürlichsprachliche und/oder formale Spezifikation 10 zum Beispiel eine Beschreibung der (gewünschten) Funktionsweise des mindestens einen Berechnungsmodells 40 umfassen. Alternativ oder zusätzlich kann die natürlichsprachliche und/oder formale Spezifikation 10 zum Beispiel den zu erreichenden Zweck des mindestens einen Berechnungsmodells 40 umfassen.

Das Maschinenlernmodell 30 kann ein Foundation Model (auf Deutsch etwa: Basismodell) umfassen oder sein. Ein Foundation Model kann ein großes Maschinenlernmodell sein, das auf einer großen Datenmenge in großem Umfang trainiert wurde (oft durch selbstüberwachtes Lernen oder halbüberwachtes Lernen), so dass es an eine breite Palette nachgelagerter Aufgaben angepasst werden kann. Insbesondere kann das Maschinenlernmodell ein Large Language Model (LLM) umfassen oder sein. Ein Large Language Model kann ein Sprachmodell sein, das sich durch seine Größe auszeichnet. Insbesondere kann das Large Language Model ein Chatbot sein und/oder über Chatbot-Funktionalität verfügen. Als Large Language Model kann zum Beispiel Google BERT verwendet werden. Alternativ oder zusätzlich kann als Large Language Model zum Beispiel OpenAI ChatGPT (z.B. in der Version vom 24.05.2023) verwendet werden. Alternativ oder zusätzlich kann als Large Language Model zum Beispiel Hugging Face Bloom verwendet werden.

Alternativ oder zusätzlich kann das Maschinenlernmodell ein Multi-Domain Model umfassen oder sein. Hier kann zum Beispiel OpenAI GPT-4 (z.B. in der Version vom 14.03.2023) verwendet werden.

Beispielhafte Ausführungsformen des Maschinenlernmodells 30 sind in **Fig. 2** schematisch illustriert.

Der Prompt 20 kann ein natürlichsprachlicher Text sein. Der Prompt 20 kann eine natürlichsprachliche Anweisung an das Maschinenlernmodell 30 umfassen oder sein. Der Prompt kann zum Beispiel eine sprachliche Anweisung an das Large Language Model (LLM) umfassen, die darauf gerichtet ist, ein oder mehrere Berechnungsmodelle basierend auf der Spezifikation 10 zu erzeugen. Dabei kann zum Beispiel angegeben werden, dass die Berechnungsmodelle einen Kellerautomaten umfassen sollen. Alternativ oder zusätzlich kann angegeben werden, dass die Berechnungsmodelle einen Zustandsautomaten umfassen sollen. Alternativ oder zusätzlich kann angegeben werden, dass die Berechnungsmodelle ein Petri-Netz umfassen sollen. Insbesondere kann dabei angegeben werden, dass die Berechnungsmodelle einen Kellerautomaten, einen Zustandsautomaten und/oder ein Petri-Netz umfassen sollen.

Alternativ oder zusätzlich kann der Prompt eine sprachliche Anweisung an das Large Language Model (LLM) umfassen, die darauf gerichtet ist, ein oder mehrere Berechnungsmodelle zu erzeugen, bei denen das die Spezifikation 10 verletzende mindestens eine Gegenbeispiel 50 nicht auftritt. Auch hier kann, wie bereits diskutiert, angegeben werden, dass die Berechnungsmodelle einen Kellerautomaten, einen Zustandsautomaten und/oder ein Petri-Netz umfassen sollen. Alternativ oder zusätzlich kann der Prompt eine sprachliche Anweisung an das Large Language Model (LLM) umfassen, die darauf gerichtet ist, ein oder mehrere Berechnungsmodelle zu erzeugen, die das vorbestimmte Berechnungsmodell 60 erweitern, verbessern und/oder korrigieren.

Das Erzeugen 130 des mindestens einen Berechnungsmodells 40 kann Erzeugen einer Vielzahl von Berechnungsmodellen umfassen. Das Verfahren 100 kann insbesondere Erzeugen 130 einer Vielzahl von Berechnungsmodellen (d.h. mindestens zweier Berechnungsmodelle) zumindest basierend auf der Spezifikation 10 und dem Prompt 20 (oder mehreren Prompts) umfassen. Ein oder mehrere Berechnungsmodelle der Vielzahl der Berechnungsmodelle können zum Beispiel zumindest basierend auf der Spezifikation 10 und dem Prompt 20 erzeugt werden, d.h. in einer (einzigen) Ausführung des Verfahrens 100. Alternativ oder zusätzlich können ein oder mehrere Berechnungsmodelle der Vielzahl der Berechnungsmodelle durch Mehrfachausführungen des Verfahrens 100 erzeugt werden 130. Vorteilhafterweise kann in Mehrfachausführungen des Verfahrens 100 der Prompt 20 variiert werden. Andererseits muss der Prompt 20 in Mehrfachausführungen des Verfahrens 100 nicht variiert werden. Alternativ oder zusätzlich können ein oder mehrere Berechnungsmodelle der Vielzahl der Berechnungsmodelle vorbestimmt sein. Alternativ oder zusätzlich kann in Mehrfachausführungen des Verfahrens 100 das Maschinenlernmodell variiert werden.

Die Vielzahl der Berechnungsmodelle kann Berechnungsmodelle unterschiedlichen Typs umfassen. Zum Beispiel kann die Vielzahl der Berechnungsmodelle ein oder mehrere Zustandsautomaten, ein oder mehrere Kellerautomaten und/oder ein oder mehrere Petri-Netze umfassen. Durch das Bewerten der Berechnungsmodelle kann dann zum Beispiel ausgegeben werden, wie die gemäß Spezifikation 10 gewünschten Eigenschaften und/oder das gemäß Spezifikation 10 gewünschte Verhalten des technischen Systems am besten abgebildet werden kann. Dieses Berechnungsmodell kann dann ausgewählt werden.

Das mindestens eine Berechnungsmodell 40 kann dafür ausgelegt sein, die Steuerung, Regelung und/oder Überwachung eines technischen Systems, insbesondere eines cyber-physisches Systems, insbesondere mindestens einer Recheneinheit eines Fahrzeugs abzubilden.

Die natürlichsprachliche und/oder formale Spezifikation 10 kann zum Beispiel beschreiben, wie das technische System, insbesondere das cyber-physische System, insbesondere die mindestens eine Recheneinheit des Fahrzeugs gesteuert, geregelt und/oder überwacht werden soll. Die natürlichsprachliche und/oder formale Spezifikation 10 kann zum Beispiel definieren, welche Eigenschaft, welcher Zustand und/oder welches Verhalten des technischen Systems unerwünscht ist und verhindert werden soll. Beispiele hierfür können sein: "Zustand 'ERROR' soll nie erreicht werden" und/oder "der Teil A und der Teil B sollen niemals gleichzeitig im Zustand ,REQUEST GRANTED' sein". Weiterhin kann zum Beispiel ein Teil der Spezifikation 10 ein Ausschluss von z.B. Deadlocks sein. Durch den Ausschluss von Deadlocks kann verhindert werden, dass zwei oder mehrere Abnehmer zu lange (mithin unendlich lang) auf eine Antwort warten müssen. Andere Kombinationen von Berechnungsmodellen und (formalen) Spezifikationen sind ebenso möglich.

Ein Berechnungsmodell kann zum Beispiel zur Darstellung, wie Hardware angesteuert wird, genutzt werden. Ebenfalls kann ein Berechnungsmodell zum Beispiel ein oder mehrere Protokolle im Internet of Things (loT) Bereich darstellen. Ein Berechnungsmodell kann ein Modell des Verhaltens und/oder der Eigenschaften des technischen Systems, insbesondere des cyber-physischen Systems, insbesondere der mindestens einen Recheneinheit des Fahrzeugs sein. Das Modell kann wie zum Beispiel im Falle des Zustandsautomaten Zustände, Zustandsübergänge und/oder Aktionen umfassen. Ein Zustand kann eine Information über die Vergangenheit beinhalten, insbesondere da das technische System den Zustand auf dessen bisherigem Weg erreicht hat, d. h., der Zustand kann in gewissem Umfang die Änderungen der Eingabe von einem früheren Zeitpunkt (z.B. seit dem Systemstart) bis zum aktuellen Zeitpunkt reflektieren. Ein Zustandsübergang kann ein Übergang aus dem aktuellen Zustand in einen neuen (anderen) Zustand sein. Zu diesem Übergang kann es kommen, wenn die angegebenen logischen Bedingungen/"Eingaben" vorliegen, die erfüllt sein müssen, um den Übergang zu ermöglichen. Eine Aktion kann die "Ausgabe" des Berechnungsmodells sein, die in einer bestimmten Situation erfolgt. Es kann zum Beispiel vier Typen von Aktionen geben: Eingangsaktion, Ausgangsaktion, Eingabeaktion und Übergangsaktion. Eine Eingangsaktion kann eine Aktion sein, die beim Eintreten in einen Zustand (egal über welchen Zustandsübergang der Zustand erreicht wurde, falls es mehrere gibt) ausgeführt/ausgegeben wird. Eine Ausgangsaktion kann eine Aktion sein, die beim Verlassen eines Zustandes generiert wird (egal über welchen Zustandsübergang der Zustand verlassen wird). Eine Eingabeaktion kann eine Aktion sein, die abhängig vom aktuellen Zustand und der Eingabe generiert wird. Einem Zustand können also mehrere Aktionen zugeordnet sein, die abhängig davon ausgeführt werden, über welchen Zustandsübergang er erreicht/verlassen wird. Eine Übergangsaktion kann eine Aktion sein, die abhängig/während eines Zustandsübergangs ausgeführt wird.

Das Verfahren 100 kann Übersetzen 160 des mindestens einen Berechnungsmodells 40 in einen ausführbaren Code umfassen, der dafür ausgelegt ist, das technische System, insbesondere das cyber-physische System, insbesondere die mindestens eine Recheneinheit des Fahrzeugs zu steuern, regeln und/oder zu überwachen.

Das Übersetzen 160 des mindestens einen Berechnungsmodells 40 in den ausführbaren Code kann, muss aber nicht via ein weiteres Maschinenlernmodell 30 realisiert werden. Andererseits kann das Übersetzen 160 entbehrlich sein, insbesondere wenn das erzeugte 130 mindestens eine Berechnungsmodell 40 bereits ein ausführbarer Code ist. Dieser kann nämlich bereits dafür ausgelegt sein, das technische System, insbesondere das cyber-physische System, insbesondere die mindestens eine Recheneinheit des Fahrzeugs zu steuern, regeln und/oder zu überwachen. In anderen Worten, das bereits ausführbare Berechnungsmodell oder das in den ausführbaren Code übersetzte 160 Berechnungsmodell können dafür ausgelegt sein, das technische System zu steuern, regeln und/oder zu überwachen. Insbesondere können sie auf einem oder mehreren Recheneinheiten (z.B. Steuergeräten) z.B. im technischen System ausgeführt werden.

Typische Beispiele können die Steuerung im Automobilbereich wie z.B. Motorsteuerung, Ansteuerung von Aktoren, Diagnose und/oder Protokolle im loT-Bereich sein. Das erstellte 130 Berechnungsmodell kann insbesondere dafür benutzt werden, eine Kontrollstruktur automatisiert zu erzeugen, die dann die genannten Systeme steuert, z.B. Motorsteuerung, ABS/Bremsen, generell im embedded Bereich weit verbreitet zur Ansteuerung von z.B. Aktoren.

Das Verfahren 100 kann in einer elektronischen Programmierumgebung ausgeführt werden. Über die elektronische Programmierumgebung kann die Ausführung und/oder die Mehrfachausführungen des Verfahrens 100 interaktiv und/oder automatisiert gesteuert werden. Die elektronische Programmierumgebung ermöglicht die Programmierung und/oder Interaktion mit einer Vielzahl von Iterationen des Verfahrens 100. Insbesondere beim Initialisieren der Iterationen und/oder beim Debuggen während der Iterationen erweist sich die elektronische Programmierumgebung als vorteilhaft. Zum Beispiel können der Prompt 20 und/oder der weitere Prompt 21 in der elektronischen Programmierumgebung angepasst werden.

Im Folgenden werden spezielle Faktoren offenbart, von denen das Erzeugen des mindestens einen Berechnungsmodell abhängig sein kann.

Das Erzeugen 130, via das Maschinenlernmodell 30, des mindestens einen Berechnungsmodells 40 kann zumindest auf einer formalen Spezifikation basieren. Hierbei kann die Spezifikation 10 die formale Spezifikation umfassen. Zum Beispiel kann die Spezifikation 10 die formale Spezifikation sein. In einem anderen Beispiel kann die Spezifikation 10 die formale Spezifikation umfassen. Hier kann die Spezifikation 10 zum Beispiel zusätzlich die natürlichsprachliche Beschreibung umfassen. In einem weiteren Beispiel kann die formale Spezifikation als weiterer Input des Maschinenlernmodells 30 beim Erzeugen 130 des mindestens einen Berechnungsmodells berücksichtigt werden.

Alternativ oder zusätzlich kann das Erzeugen 130, via das Maschinenlernmodell 30, des mindestens einen Berechnungsmodells 40 zumindest auf mindestens einem die Spezifikation 10 verletzenden Gegenbeispiel 50 basieren.

Ein Gegenbeispiel 50 kann zum Beispiel eine Verhaltensweise des mindestens einen Berechnungsmodells sein, die nach der Spezifikation 10 (des technischen Systems) nicht auftreten soll. Zum Beispiel kann die Spezifikation 10 vorschreiben: "nach Betreten des Bremszustands (Zustand B) muss zuerst die Bremse gelöst werden (Zustand R) bevor beschleunigt werden kann (Zustand A)." Ein Gegenbeispiel 50 wäre hier zum Beispiel ein Ablauf, der die Zustandsfolge B, X, ..., X, A enthält, ohne ein "R" dazwischen (hier sind alle X ungleich "R").

Das mindestens eine die Spezifikation 10 verletzende Gegenbeispiel 50 kann zum Beispiel, wie z.B. in **Fig. 2** schematisch illustriert, als weiterer Input des Maschinenlernmodells 30 beim Erzeugen 130 des mindestens einen Berechnungsmodells berücksichtigt werden. Alternativ kann das mindestens eine die Spezifikation 10 verletzende Gegenbeispiel 50 via den Prompt 20 in das Erzeugen 130 des mindestens einen Berechnungsmodells eingehen. Das mindestens eine die Spezifikation 10 verletzende Gegenbeispiel 50 kann ein Text sein. Das mindestens eine die Spezifikation 10 verletzende Gegenbeispiel 50 kann, muss aber nicht aus einer früheren Iteration des Verfahrens 100 resultieren. Hierzu kann gegebenenfalls auch der Prompt 20 für die aktuelle Iteration angepasst werden. Zum Beispiel kann der Prompt 20 eine Aufforderung umfassen, das mindestens eine Berechnungsmodell so zu verbessern und/oder zu korrigieren, dass das Gegenbeispiel 50 nicht mehr beim erzeugten 130 mindestens einen Berechnungsmodell auftritt.

Alternativ oder zusätzlich kann das Erzeugen 130, via das Maschinenlernmodell 30, des mindestens einen Berechnungsmodells 40 zumindest auf einem vorbestimmten Berechnungsmodell 60 basieren. Hier kann das vorbestimmte Berechnungsmodell 60 in einer früheren Iteration des Verfahrens 100 erzeugt worden sein. Andererseits muss dies nicht der Fall sein.

Das vorbestimmte Berechnungsmodell 60 kann zum Beispiel, wie z.B. in **Fig. 2** schematisch illustriert, als weiterer Input des Maschinenlernmodells 30 beim Erzeugen 130 des mindestens einen Berechnungsmodells berücksichtigt werden. Alternativ kann das vorbestimmte Berechnungsmodell 60 via den Prompt 20 in das Erzeugen 130 des mindestens einen Berechnungsmodells eingehen. Zum Beispiel kann das vorbestimmte Berechnungsmodell 60 ein in einer früheren Iteration des Verfahrens 100 erzeugtes Berechnungsmodell sein, das nun in der aktuellen Iteration des Verfahrens 100 erweitert, verbessert und/oder korrigiert werden soll. Hierzu kann gegebenenfalls auch der Prompt 20 für die aktuelle Iteration angepasst werden. Zum Beispiel kann der Prompt 20 eine Aufforderung umfassen, einen oder mehrere Syntax- und/oder Grammatikfehler im vorbestimmten Berechnungsmodell 60 zu finden und zu korrigieren.

Das Verfahren 100 kann, wie z.B. durch das "OK" in **Fig. 3** schematisch illustriert, Beibehalten 150 des mindestens einen Berechnungsmodells 40 nach einem vorbestimmten Kriterium basierend auf dem Bewertungsergebnis umfassen. Das Verfahren 100 kann wie z.B. in Fig. 1 schematisch illustriert (muss aber nicht) Verwerfen 151 des mindestens einen Berechnungsmodells 40 umfassen. Anstelle des Verwerfens kann das mindestens eine Berechnungsmodell zum Beispiel repariert werden, siehe z.B. **Fig. 3****.** Wird das mindestens eine Berechnungsmodell nicht beibehalten 150, kann es und/oder eine aus ihm abgeleitete Erkenntnis in einer erneuten Iteration des Verfahrens 100 berücksichtigt werden.

Das Bewerten 140 des mindestens einen Berechnungsmodells kann Prüfen, ob die Syntax und/oder Grammatik des mindestens einen Berechnungsmodells 40 korrekt ist, umfassen. Dazu kann zum Beispiel ein Simulator für einen Automaten zum Einsatz kommen. In anderen Worten, das Berechnungsmodell 40 kann zumindest teilweise ausgeführt werden, um z.B. grammatikalisch falsche Ausgaben im Maschinenlernmodell 30 zu erkennen. Wie bereits diskutiert, kann zum Beispiel das in inkorrekter Syntax und/oder inkorrekter Grammatik erzeugte 130 mindestens eine Berechnungsmodell als vorbestimmtes Berechnungsmodell 60 zusammen mit einem gegebenenfalls angepassten Prompt 20 dafür genutzt werden, in einer weiteren Iteration des Verfahrens 100 ein erweitertes, verbessertes und/oder korrigiertes Berechnungsmodell zu erzeugen.

Alternativ oder zusätzlich kann das Bewerten 140 des mindestens einen Berechnungsmodells 40 Prüfen umfassen, ob eine formale Spezifikation von dem mindestens einen Berechnungsmodell 40 eingehalten wird. Dies kann zum Beispiel durch einen Model Checker erfolgen. Die formale Spezifikation kann, muss aber nicht von der Spezifikation 10 umfasst sein, d.h. die formale Spezifikation kann, muss aber nicht diejenige formale Spezifikation sein, auf der gegebenenfalls das Erstellen 130 des mindestens einen Berechnungsmodells basierte. Das Verfahren 100 kann Empfangen der formalen Spezifikation umfassen. In Fällen, in denen das Berechnungsmodell entscheidbar ist (z.B. beim Zustandsautomaten und/oder Kellerautomaten) kann über den Model Checker geprüft werden, ob die formale Spezifikation eingehalten wird. Das Verfahren kann insbesondere Einrichten einer Verifikationsumgebung umfassen.

Das Verfahren 100 kann Ausgeben eines Gegenbeispiels 50 umfassen, wenn das Prüfen ergibt, dass die formale Spezifikation von dem mindestens einen Berechnungsmodell 40 nicht eingehalten wird. Wie bereits diskutiert, kann zum Beispiel das Gegenbeispiel 50 zusammen mit einem gegebenenfalls angepassten Prompt 20 dafür genutzt werden, in einer weiteren Iteration des Verfahrens 100 ein erweitertes, verbessertes und/oder korrigiertes Berechnungsmodell zu erzeugen.

Das Bewerten 140 des mindestens einen Berechnungsmodells 40 kann Bewerten der Vielzahl der Berechnungsmodelle umfassen. Zum Beispiel kann ein oder jedes Berechnungsmodell der Vielzahl im Hinblick auf ihre Komplexität bewertet werden. Alternativ oder zusätzlich kann geprüft werden, ob die Syntax und/oder Grammatik des einen oder jeden Berechnungsmodells der Vielzahl korrekt sind, optional jeweils via den Simulator für einen Automaten. Alternativ oder zusätzlich kann geprüft werden, ob die formale Spezifikation von einem oder jedem Berechnungsmodell der Vielzahl eingehalten wird. Im Falle, dass die formale Spezifikation von einem oder jedem Berechnungsmodell der Vielzahl nicht eingehalten wird, können jeweils ein oder mehrere Gegenbeispiele 50 ausgegeben werden. Alternativ oder zusätzlich kann das Bewerten der Vielzahl der Berechnungsmodelle Auswählen eines Berechnungsmodells aus der Vielzahl der Berechnungsmodelle nach einem vorbestimmten Kriterium umfassen. Hier kann dann das ausgewählte Berechnungsmodell das mindestens eine erzeugte 130 Berechnungsmodell 40 sein. Das vorbestimmte Kriterium kann zum Beispiel derart ausgebildet sein, dass im Falle, dass kein Berechnungsmodell der Vielzahl die formale Spezifikation erfüllt, das (bisher) beste Berechnungsmodell, d.h. z.B. dasjenige Berechnungsmodell, das am wenigsten die formale Spezifikation verletzt, ausgewählt wird. Dieses Berechnungsmodell und mindestens ein dazugehöriges Gegenbeispiel 50 kann zusammen mit einem gegebenenfalls angepassten Prompt 20 in einer weiteren Iteration des Verfahrens 100 verwendet werden, um ein besseres Berechnungsmodell zu erzeugen.

Das Verfahren 100 kann Ausgeben 170 des Bewertungsergebnisses umfassen. Dies kann zum Beispiel via die elektronische Programmierumgebung erfolgen. Dies ist vorteilhaft, da anhand des Bewertungsergebnisses der Ablauf des Verfahrens 100 angepasst werden kann. So können zum Beispiel Berechnungsmodelle aufgrund der Bewertungsergebnisse manuell ausgewählt oder aussortiert werden.

Alternativ oder zusätzlich kann das Verfahren 100 Ausgeben 171 des mindestens einen Berechnungsmodells 40 umfassen. Dies kann ebenfalls zum Beispiel via die elektronische Programmierumgebung erfolgen.

Das Verfahren 100 kann auf mindestens einer Eingabe eines Benutzers einer Schnittstelle der elektronischen Programmierumgebung basieren. Zum Beispiel kann das Verfahren 100 und/oder dessen Mehrfachausführungen über die elektronische Programmierumgebung (interaktiv) gesteuert werden. Dies kann zum Beispiel hilfreich sein, beim Einrichten der Programmierumgebung und/oder der Ausführungsumgebung, bevor das Verfahren 100 automatisiert durchlaufen lassen wird. Alternativ oder zusätzlich kann die interaktive Steuerung beim Debuggen des automatisierten Durchlaufs des Verfahrens 100 hilfreich sein.

Das Verfahren 100 kann wiederholt werden. Dabei können das Maschinenlernmodell und/oder der Prompt sowie gegebenenfalls weitere Inputs variiert werden. Bei Bedarf, wenn z.B. das Bewertungsergebnis des mindestens einen Berechnungsmodells nicht hinreichend gut ist, können in mindestens einer weiteren Iteration zusätzliche Berechnungsmodelle erzeugt werden, insbesondere um die bisher erzeugten Berechnungsmodelle zu erweitern, zu verbessern und/oder zu korrigieren. Dabei können z.B. die bisherigen Berechnungsmodelle als zusätzliche Eingabe genutzt werden.

Unterschiedliche Berechnungsmodelle können sowohl durch Einfach- als auch durch Mehrfachausführungen des Verfahrens 100 erzeugt werden. Bereits in einer Einfachausführung des Verfahrens 100 besteht eine Varianz durch die inhärente Variabilität des Maschinenlernmodells (temperature). Soll es auf Basis eines Prompts zum Beispiel 101 unterschiedliche Berechnungsmodelle generieren, können dank der inhärenten Variabilität tatsächlich 101 unterschiedliche Berechnungsmodelle generiert werden. Weiterhin besteht Varianz in Mehrfachausführungen des Verfahrens 100 durch die mögliche Vielfalt an Prompts. Alternativ oder zusätzlich besteht Varianz durch unterschiedliche Kombinationen verschiedener Eingabeartefakte (z.B. nur Spezifikation, mit vorbestimmten Berechnungsmodell, mit Gegenbeispiel, etc.). Werden (zum Beispiel durch unabhängige Mehrfachausführungen) doch statisch feststellbare mehrfach vorkommende Berechnungsmodelle erzeugt, können sie aussortiert werden. Eine Varianz kann auch in Mehrfachausführungen des Verfahrens 100 durch unterschiedliche Spezifikationen gegeben sein.

Offenbart wird weiterhin ein computer-implementiertes Verfahren 200 zum weiteren Trainieren eines Maschinenlernmodells 30, wobei das Maschinenlernmodell 30 dafür ausgelegt ist, mindestens ein Berechnungsmodell 40, insbesondere einen Kellerautomaten, einen Zustandsautomaten und/oder ein Petri-Netz, zumindest basierend auf mindestens einer Spezifikation 10, die das mindestens eine Berechnungsmodell 40 erfüllen soll, und einem Prompt 20 zu erzeugen 130. Das Verfahren 200 umfasst Anpassen des Maschinenlernmodells 30 zumindest basierend auf mindestens einem Berechnungsmodell 40 und mindestens einem Bewertungsergebnis, wobei das mindestens eine Bewertungsergebnis durch Bewerten 140 des mindestens einen Berechnungsmodell 40 resultiert.

Das Bewerten 140 kann, muss aber nicht Teil des Verfahrens 200 sein. Das mindestens eine Berechnungsmodell 40 kann nach dem Verfahren 100 für die automatisierte Erzeugung eines Berechnungsmodells 40 erzeugt 130 und bewertet 140 worden sein. Das Verfahren 200 kann, muss aber nicht eine Fortsetzung des Verfahrens 100 sein.

Alternativ oder zusätzlich kann das Verfahren 100 via ein angepasstes Maschinenlernmodell erneut ausgeführt werden. Insbesondere kann das Maschinenlernmodell 30 zwischen Mehrfachausführungen des Verfahrens 100 nach dem Verfahren 200 angepasst werden.

Das Anpassen des Maschinenlernmodells 30 kann zumindest auf mindestens einer Spezifikation 10 sowie mindestens auf einem Prompt 20 basieren.

Das Maschinenlernmodell 30 kann durch überwachtes Learning angepasst werden. Eine solche Anpassung des Maschinenlernmodells 30 kann als überwachtes Finetuning gesehen werden. Dank des Finetuning kann ein generisches Maschinenlernmodell, das zum Beispiel auf ein allgemeines Maschinensprachverständnis trainiert worden ist, anwendungsspezifisch, d.h. hier im Hinblick auf das Erzeugen von Berechnungsmodellen angepasst werden.

Das Finetuning des Maschinenlernmodells 30 kann, muss aber nicht einer weiteren Anpassung des Maschinenlernmodells 30 durch unüberwachtes (Reinforcement) learning vorausgehen.

Alternativ oder zusätzlich kann das Anpassen des Maschinenlernmodells 30 zumindest basierend auf dem mindestens einen Berechnungsmodell 40 und dem mindestens einen Bewertungsergebnis Berechnen mindestens einer Belohnung (englisch: reward) zumindest basierend auf dem mindestens einen Bewertungsergebnis und Anpassen des Maschinenlernmodells 30 zumindest basierend auf dem mindestens einen Berechnungsmodell 40 und der mindestens einen Belohnung umfassen. Eine solche Anpassung des Maschinenlernmodells 30 kann als unüberwachtes (Reinforcement) Learning gesehen werden. Dadurch kann ein generisches Maschinenlernmodell, das zum Beispiel auf ein allgemeines Maschinensprachverständnis trainiert worden ist, und/oder ein solches Modell nach Finetuning, anwendungsspezifisch, d.h. hier im Hinblick auf das Erzeugen von Berechnungsmodellen (weiter) angepasst werden. Dadurch kann das Maschinenlernmodell 30 noch besser an den Anwendungsfall des Erzeugens von Berechnungsmodellen angepasst werden.

Eine Belohnung kann ein Parameter, insbesondere ein numerischer Parameter sein, der vergleichbar zu anderen Parametern ist, die ebenfalls Belohnungen sind. Eine Belohnung kann zum Beispiel größer, gleich oder kleiner als eine andere Belohnung sein.

Die mindestens eine Belohnung kann größer sein, wenn das mindestens eine Bewertungsergebnis besser ist, und die mindestens eine Belohnung kann niedriger sein, wenn das mindestens eine Bewertungsergebnis schlechter ist.

Ein Bewertungsergebnis kann schlechter, insbesondere schlecht sein, wenn bereits eine Prüfung, auf der das Bewertungsergebnis basiert, negativ ausgefallen ist, d.h. z.B. nicht bestanden wurde. Alternativ oder zusätzlich kann ein Bewertungsergebnis besser, insbesondere gut sein, wenn alle Prüfungen, positiv ausgefallen, d.h. z.B. bestanden wurden.

Das Maschinenlernmodell 30 kann zumindest basierend auf einer Vielzahl von Berechnungsmodellen und einer Vielzahl dazugehöriger Belohnungen angepasst werden. Das Verfahren kann hier Berechnen der Belohnungen zumindest basierend auf einer Vielzahl von Bewertungsergebnissen je Berechnungsmodell umfassen. In anderen Worten, die Belohnung für ein Berechnungsmodell braucht nicht nur von dessen Bewertungsergebnis abzuhängen, sondern kann auch auf einem oder mehreren Bewertungsergebnisse zu anderen Berechnungsmodellen basieren. Eine oder mehrere Belohnungen (d.h. die Höhe derselben) kann zum Beispiel von einer Anzahl der Bewertungsergebnisse abhängen. Alternativ oder zusätzlich können eine oder mehrere Belohnungen von einer Anzahl von besseren Bewertungsergebnissen und von einer Anzahl von schlechteren Bewertungsergebnissen, insbesondere von einem Ungleichgewicht zwischen besseren und schlechteren Bewertungsergebnissen abhängen. Alternativ oder zusätzlich, können zunächst Belohnungen je Bewertungsergebnis berechnet werden und dann basierend auf anderen Bewertungsergebnissen angepasst und/oder verrechnet werden.

Das Anpassen des Maschinenlernmodells 30 kann auf einem Reinforcement Learning Algorithmus wie zum Beispiel Proximal Policy Optimization (PPO) basieren.

Ein Teil des Maschinenlernmodells 30 kann (gewollt) nicht angepasst werden, d.h. fixiert werden. Hier wird dann nur ein anderer Teil des Maschinenlernmodells 30 angepasst.

Zum Beispiel können bestimmte Parameter wie z.B. Gewichte und/oder Verzerrungen, insbesondere Gewichte und/oder Verzerrungen auf früheren Schichten des Maschinenlernmodells 30 nicht angepasst, d.h. fixiert werden. Zum Beispiel können die Anpassungen auf hintere Schichten des Maschinenlernmodells 30 beschränkt werden, in denen Berechnungsmodelle ausgearbeitet werden. Dadurch kann sichergestellt werden, dass das Maschinenlernmodell 30 sich nicht im Hinblick auf das Maschinensprachverständnis über Gebühr verschlechtert. Andererseits kann eine Verschlechterung des Maschinensprachverständnis insoweit durch das Anpassen angestrebt werden, als es keine Rolle für das Erzeugen von Berechnungsmodellen spielt. Zum Beispiel ist (üblicherweise) das Maschinensprachverständnis von Shakespeare-Englisch nicht für das Erzeugen von Berechnungsmodellen erforderlich.

Das Verfahren 200 kann über die elektronische Programmierumgebung gesteuert werden. Insbesondere kann das Maschinenlernmodell 30 via die elektronische Programmierumgebung weiter angepasst werden.

Offenbart wird weiterhin ein Computer-System, das dafür ausgelegt ist, das computer-implementierte Verfahren 100 für die automatisierte Erzeugung eines Berechnungsmodells, insbesondere eines Kellerautomaten, eines Zustandsautomaten und/oder eines Petri-Netzes, auszuführen. Alternativ oder zusätzlich kann das Computer-System dafür ausgelegt sein, das computer-implementierte Verfahren 200 zum weiteren Trainieren eines Maschinenlernmodells 30 auszuführen. Insbesondere kann das Computer-System dafür ausgelegt sein, das computer-implementierte Verfahren 100 für die automatisierte Erzeugung eines Berechnungsmodells, insbesondere eines Kellerautomaten, eines Zustandsautomaten und/oder eines Petri-Netzes, und (z.B. im Anschluss) das computer-implementierte Verfahren 200 zum weiteren Trainieren eines Maschinenlernmodells 30 auszuführen. Das Computer-System kann einen Prozessor und/oder einen Arbeitsspeicher umfassen.

Offenbart wird weiterhin ein Computer-Programm, das dafür ausgelegt ist, das computer-implementierte Verfahren 100 für die automatisierte Erzeugung eines Berechnungsmodells, insbesondere eines Kellerautomaten, eines Zustandsautomaten und/oder eines Petri-Netzes, auszuführen. Alternativ oder zusätzlich kann das Computer-Programm dafür ausgelegt sein, das computer-implementierte Verfahren 200 zum weiteren Trainieren eines Maschinenlernmodells 30 auszuführen. Insbesondere kann das Computer-Programm dafür ausgelegt sein, das computer-implementierte Verfahren 100 für die automatisierte Erzeugung eines Berechnungsmodells, insbesondere eines Kellerautomaten, eines Zustandsautomaten und/oder eines Petri-Netzes, und (z.B. im Anschluss) das computer-implementierte Verfahren 200 zum weiteren Trainieren eines Maschinenlernmodells 30 auszuführen. Das Computer-Programm kann z.B. in interpretierbarer oder in kompilierter Form vorliegen. Es kann (auch in Teilen) zur Ausführung z.B. als Bit- oder Byte-Folge in den RAM eines Computers geladen werden.

Offenbart wird weiterhin ein computer-lesbares Medium oder Signal, das das Computer-Programm speichert und/oder enthält. Das Medium kann z.B. eines von RAM, ROM, EPROM, HDD, SSD, ... umfassen, auf/in dem das Signal gespeichert wird.

## Patentansprüche

1. Computer-implementiertes Verfahren (100) für die automatisierte Erzeugung eines Berechnungsmodells, insbesondere eines Kellerautomaten, eines Zustandsautomaten und/oder eines Petri-Netzes, umfassend:
- Erzeugen (130), via ein Maschinenlernmodell (30), mindestens eines Berechnungsmodells (40) zumindest basierend auf einer Spezifikation (10), die das mindestens eine Berechnungsmodell (40) erfüllen soll, und einem Prompt (20);
- Bewerten (140) des mindestens einen Berechnungsmodells (40), wobei ein Bewertungsergebnis resultiert.

2. Verfahren (100) nach Anspruch 1, wobei das mindestens eine Berechnungsmodell (40) dafür ausgelegt ist, die Steuerung, Regelung und/oder Überwachung eines technischen Systems, insbesondere eines cyber-physisches Systems, insbesondere mindestens einer Recheneinheit eines Fahrzeugs abzubilden.

3. Verfahren (100) nach Anspruch 2, umfassend:
- Übersetzen (160) des mindestens einen Berechnungsmodells (40) in einen ausführbaren Code, der dafür ausgelegt ist, das technische System, insbesondere das cyber-physische System, insbesondere die mindestens eine Recheneinheit des Fahrzeugs zu steuern, regeln und/oder zu überwachen.

4. Verfahren (100) nach einem der vorhergehenden Ansprüche, wobei das Erzeugen (130), via das Maschinenlernmodell (30), des mindestens einen Berechnungsmodells (40) zumindest auf mindestens einem die Spezifikation (10) verletzenden Gegenbeispiel (50) basiert.

5. Verfahren (100) nach einem der vorhergehenden Ansprüche, umfassend:
- Beibehalten (150) des mindestens einen Berechnungsmodells (40) nach einem vorbestimmten Kriterium basierend auf dem Bewertungsergebnis;
- anderenfalls, optional, Verwerfen (151) des mindestens einen Berechnungsmodells (40).

6. Verfahren (100) nach einem der vorhergehenden Ansprüche, wobei das Bewerten (140) des mindestens einen Berechnungsmodells umfasst:
- Prüfen, ob die Syntax und/oder Grammatik des mindestens einen Berechnungsmodells (40) korrekt ist, optional via ein Simulator für einen Automaten.

7. Verfahren (100) nach einem der vorhergehenden Ansprüche, wobei das Bewerten (140) des mindestens einen Berechnungsmodells (40) umfasst:
- Prüfen, ob eine formale Spezifikation von dem mindestens einen Berechnungsmodell (40) eingehalten wird, optional via ein Model Checker.

8. Verfahren (100) nach Anspruch 7, umfassend:
- Ausgeben eines Gegenbeispiels (50), wenn das Prüfen ergibt, dass die formale Spezifikation von dem mindestens einen Berechnungsmodell (40) nicht eingehalten wird.

9. Verfahren (100) nach einem der vorhergehenden Ansprüche, wobei das Erzeugen (130) des mindestens einen Berechnungsmodells (40) Erzeugen einer Vielzahl von Berechnungsmodellen umfasst, wobei das Bewerten (140) des mindestens einen Berechnungsmodells (40) Bewerten der Vielzahl der Berechnungsmodelle umfasst.

10. Verfahren (100) nach Anspruch 9, wobei das Bewerten der Vielzahl der Berechnungsmodelle umfasst:
- Auswählen eines Berechnungsmodells aus der Vielzahl der Berechnungsmodelle nach einem vorbestimmten Kriterium, optional wobei das ausgewählte Berechnungsmodell das mindestens eine erzeugte (130) Berechnungsmodell (40) ist.

11. Computer-implementiertes Verfahren (200) zum weiteren Trainieren eines Maschinenlernmodells (30), wobei das Maschinenlernmodell (30) dafür ausgelegt ist, mindestens ein Berechnungsmodell (40), insbesondere einen Kellerautomaten, einen Zustandsautomaten und/oder ein Petri-Netz, zumindest basierend auf mindestens einer Spezifikation (10), die das mindestens eine Berechnungsmodell (40) erfüllen soll, und einem Prompt (20) zu erzeugen (130); das Verfahren (200) umfassend:
- Anpassen des Maschinenlernmodells (30) zumindest basierend auf mindestens einem Berechnungsmodell (40) und mindestens einem Bewertungsergebnis, wobei das mindestens eine Bewertungsergebnis durch Bewerten (140) des mindestens einen Berechnungsmodell (40) resultiert;
wobei das mindestens eine Berechnungsmodell (40) nach dem Verfahren (100) für die automatisierte Erzeugung eines Berechnungsmodells, insbesondere eines Kellerautomaten, eines Zustandsautomaten und/oder eines Petri-Netzes, nach einem der vorhergehenden Ansprüche erzeugt (130) und bewertet (140) wurde.

12. Verfahren (200) nach Anspruch 11, wobei das Anpassen des Maschinenlernmodells (30) zumindest basierend auf der mindestens einen Spezifikation (10) und dem mindestens einen Bewertungsergebnis umfasst:
- Berechnen mindestens einer Belohnung zumindest basierend auf dem mindestens einen Bewertungsergebnis;
- Anpassen des Maschinenlernmodells (30) zumindest basierend auf der mindestens einen Spezifikation (10) und der mindestens einen Belohnung.

13. Computer-System, dafür ausgelegt,
das computer-implementierte Verfahren (100) für die automatisierte Erzeugung eines Berechnungsmodells, insbesondere eines Kellerautomaten, eines Zustandsautomaten und/oder eines Petri-Netzes, nach einem der Ansprüche 1 bis 10 und/oder
das computer-implementierte Verfahren (200) zum weiteren Trainieren eines Maschinenlernmodells (30) nach Anspruch 11 oder 12 auszuführen.

14. Computer-Programm, dafür ausgelegt,
das computer-implementierte Verfahren (100) für die automatisierte Erzeugung eines Berechnungsmodells, insbesondere eines Kellerautomaten, eines Zustandsautomaten und/oder eines Petri-Netzes, nach einem der Ansprüche 1 bis 10 und/oder
das computer-implementierte Verfahren (200) zum weiteren Trainieren eines Maschinenlernmodells (30) nach Anspruch 11 oder 12 auszuführen.

15. Computer-lesbares Medium oder Signal, das das Computer-Programm nach Anspruch 14 speichert und/oder enthält.
